# EUROPÄISCHE PATENTSCHRIFT

(11) **EP 3 163 425 B1**
(45) Veröffentlichungstag und Bekanntmachung des Hinweises auf die Patenterteilung: **27.02.2019**
(21) Anmeldenummer: 16194407.9
(22) Anmeldetag: 18.10.2016
(51) Int. Cl.: G06F 3/0486, G06F 3/0481, G06F 3/0488, G06F 9/445, G06F 9/54, G09G 5/14, G06F 9/451, G06F 3/14

(54) **VERFAHREN ZUM BETREIBEN EINES RECHNERSYSTEMS**
METHOD FOR OPERATING A COMPUTER SYSTEM
PROCÉDÉ DE FONCTIONNEMENT D'UN SYSTÈME INFORMATIQUE

(30) Priorität: 02.11.2015 DE 102015221383
(43) Veröffentlichungstag der Anmeldung: 03.05.2017
(73) Patentinhaber: VOLKSWAGEN AKTIENGESELLSCHAFT, 38440 Wolfsburg (DE)
(72) Erfinder: Bartsch, Patrick, 38442 Wolfsburg (DE)

(56) Entgegenhaltungen:
- EP-A2- 0 548 709
- WO-A1-2015/065018
- DE-A1-102013 002 891
- US-A1- 2007 113 195
- US-A1- 2008 127 162
- US-A1- 2011 316 796

## Beschreibung

Die vorliegende Erfindung betrifft ein Verfahren zum Betreiben eines Rechnersystems in einem Fahrzeug sowie eine Rechnersystem in einem Fahrzeug.

In zunehmendem Maße werden Rechnersysteme verwendet, um Nutzern eine Vielzahl von Funktionen zur Verfügung zu stellen. Weit verbreitete mobile Nutzergeräte können verschiedenste Aufgaben erfüllen und auch in Fahrzeugen wachsen die Ansprüche an die Integration elektronischer Einrichtungen und Funktionen, zum Beispiel in einem Infotainmentsystem, durch das Informationen zu Einrichtungen des Fahrzeugs ausgegeben werden und eine Bedienung ermöglicht wird. Ferner bieten elektronische Geräte, etwa im Haushalt oder in der Unterhaltungselektronik, beispielsweise Fernseher, zunehmend Möglichkeiten zur Vernetzung und damit auch zur Verwendung in verschiedensten Kontexten des Alltags.

Dabei stellt es allerdings immer noch eine komplexe Aufgabe dar, mehrere Funktionalitäten für das gleiche Gerät bereitzustellen. Vor allem eine übersichtliche Darstellung und einfache Bedienung wird umso schwieriger, je mehr Funktionen dargestellt und gesteuert werden müssen. Hinzu kommen Sicherheitsaspekte, insbesondere in Fahrzeugen, da zunehmende Fähigkeiten eines Rechnersystems auch neue Missbrauchspotentiale eröffnen.

In der US 2007/113195 A1 wird ein Verfahren beschrieben, bei dem nach dem Start einer Anwendung eine Textdatei geöffnet wird, die Informationen zur Konfiguration eines Fensters enthält. Anhand dieser Informationen können unterschiedliche Parameter des Fensters eingestellt werden. Die Textdatei kann zudem aktualisiert werden, etwa nachdem das Fenster bewegt wurde.

Es ist daher die Aufgabe der Erfindung, ein Verfahren zum Betreiben eines Rechnersystems und ein Rechnersystem zur Verfügung zu stellen, die eine einfache, übersichtliche und sichere Bedienung von Funktionalitäten und Ausgabe von Informationen erlauben.

Erfindungsgemäß wird diese Aufgabe durch ein Verfahren mit den Merkmalen des Anspruchs 1 und ein Rechnersystem mit den Merkmalen des Anspruchs 14 gelöst. Vorteilhafte Ausgestaltungen und Weiterbildungen ergeben sich aus den abhängigen Ansprüchen. Beschriebene Ausführungsarten, die nicht in den Schutzumfang der Ansprüche fallen, sind nicht Teil der beanspruchten Erfindung.

Bei dem erfindungsgemäßen Verfahren zum Betreiben eines Rechnersystems in einem Fahrzeug werden Graphikdaten einer Anzeige erzeugt und ausgegeben. Es wird zumindest eine Zeichenkette erfasst und anhand der zumindest einen Zeichenkette wird ein Befehl für ein Anwendungsprogramm erzeugt und ausgeführt, wobei der Befehl einen bestimmten Programmzustand des Anwendungsprogramms betrifft. Anhand der Zeichenkette wird ferner innerhalb der Anzeige ein Anwendungsfenster erzeugt, das Fenstereigenschaften aufweist und das dem Anwendungsprogramm zugeordnet ist. Dabei wird das Anwendungsfenster in Abhängigkeit von dem Programmzustand des Anwendungsprogramms erzeugt und anhand des Anwendungsfensters und des Anwendungsprogramms wird eine neue Zeichenkette erzeugt, wobei eine Benutzereingabe erfasst wird, die eine Wischgeste von einer Anfangsposition zu einer Endposition umfasst, wobei der Anfangsposition und der Endposition jeweils ein Anwendungsfenster zugeordnet wird, und wobei der Anfangsposition ein digitales Objekt zugeordnet wird, anhand der Wischgeste eine weitere Zeichenkette erzeugt wird und anhand der weiteren Zeichenkette ein Befehl für das digitale Objekt und zumindest eines der den Anwendungsfenstern zugeordneten Anwendungsprogramme erzeugt und ausgeführt wird, wobei die weitere Zeichenkette eine URL zur Lokalisierung eines digitalen Objekts sowie Angaben zu einer durchzuführenden Operation umfasst.

Die Steuerung der Anzeige und der Anwendungsprogramme erfolgt also wesentlich über Zeichenketten. Eine Zeichenkette ist eine Folge von Zeichen und wird auch als "String" bezeichnet. Insbesondere ist die Zeichenkette gemäß der Erfindung ein sogenannter "Uniform Resource Identifier" (URI), durch den eine Ressource identifiziert wird, beziehungsweise ein "Uniform Resource Locator" (URL), durch den die Lokalisierung der Ressource ermöglicht wird. Insbesondere bezeichnet eine URL den Speicherort eines digitalen Objekts, wobei weitere Informationen durch die Textform einfach angehängt oder bearbeitet werden können. Zeichenketten sind leicht verlängerbar und bearbeitbar, sodass sie eine in vorteilhafter Weise flexible und einfach implementierbare Steuerung des Rechnersystems ermöglichen.

Die Anzeige basiert ferner auf Anwendungsfenstern. Dies sind im Sinne der Erfindung definierte Bereiche innerhalb der Anzeige, in denen Daten von Anwendungsprogrammen ausgegeben werden können. Dabei ist insbesondere einem Anwendungsfenster genau ein Anwendungsprogramm zugeordnet. Ein Sonderfall sind Anwendungsfenster, die in einer Vollbilddarstellung die gesamte Fläche der Anzeige einnehmen. Ferner können Anwendungsfenster hierarchisch geordnet sein, das heißt, es können Unterfenster innerhalb der Anwendungsfenster erzeugt werden, die wiederum einem bestimmten Anwendungsprogramm zugeordnet sind. Anwendungsfenster können sich überlappen, wobei in diesem Fall der Inhalt des einen durch den des anderen überdeckt wird.

Die Verwaltung der Anwendungsfenster im Zusammenhang mit den ihnen zugeordneten Anwendungsprogrammen erfolgt insbesondere mittels eines Fenstermanagers. Dieses Programm spielt eine Zwischenrolle zwischen dem Betriebssystem und der eigentlichen Darstellung der Daten der Anwendungsprogramme. Die dargestellten Anwendungsfenster und die Kommunikation der zugehörigen Anwendungsprogramme können auf diese Weise gesteuert werden. Ein Wechsel zwischen Anwendungsfenstern oder eine Veränderung der Darstellung der Anwendungsfenster kann etwa animiert dargestellt werden. Dies kann insbesondere eine wechselnde Anzeige leicht für den Nutzer erfassbar und nachvollziehbar machen.

Die Erfassung der Zeichenkette kann bei dem erfindungsgemäßen Verfahren auf verschiedene Weise erfolgen. Beispielsweise kann eine bestimmte Bedienhandlung eines Nutzers mit einer bestimmten Zeichenkette verknüpft sein. So kann etwa beim Betätigen eines Knopfes oder einer Schaltfläche eine Zeichenkette erfasst werden, die beispielsweise einen Link zu einer bestimmten digitalen Ressource umfasst. In diesem Fall entspricht die Bedienhandlung des Nutzers einer Eingabe der Zeichenkette, insbesondere mit einem Link. Die Erfassung kann neben einer Benutzereingabe auch durch Prozesse des Rechnersystems und der damit ausgeführten Anwendungsprogramme erfolgen. Beispielweise kann eine Zeichenkette durch ein Anwendungsprogramm erzeugt und an das Rechnersystem übergeben werden, sodass ein bestimmtes Anwendungsprogramm aufgerufen und/oder ein Anwendungsfenster erzeugt oder modifiziert wird.

Anhand der erfassten Zeichenkette wird nun die Ausführung eines Anwendungsprogramms gesteuert und ein dazugehöriges Anwendungsfenster erzeugt. Insbesondere wird, nachdem eine Zeichenkette erfasst wurde, ein Befehl für ein Anwendungsprogramm erzeugt und ein Anwendungsfenster dargestellt, das dem Anwendungsprogramm zugeordnet ist. Beispielsweise kann der Nutzer einen Link auswählen, worauf etwa eine Webseite aufgerufen und in einem neu geöffneten Anwendungsfenster ausgegeben wird. Die Zeichenkette kann in diesem Beispiel Informationen darüber umfassen, welches Anwendungsprogramm welche Webseite aufrufen soll und welche Fenstereigenschaften das Anwendungsfenster zur Ausgabe der Webseite aufweisen soll. In der Folge wird ein Befehl so erzeugt und ausgeführt, dass das Anwendungsfenster erzeugt und das Anwendungsprogramm ausgeführt wird.

Durch die Zeichenkette kann das Anwendungsprogramm ferner in einem bestimmten Programmzustand aufgerufen werden. Beispielsweise kann bei dem Beispiel einer Webseite die Zeichenkette eine Webadresse umfassen, die an das Anwendungsprogramm, etwa einen Webbrowser, übergeben und von diesem aufgerufen wird. In einem anderen Beispiel kann eine Medienanwendung einen bestimmten Musiktitel wiedergeben oder eine Navigationsanwendung kann eine bestimmte Route anzeigen. Auch weitere Optionen können auf diese Weise angegeben werden.

Fenstereigenschaften können beispielsweise die Position und die Größe des Anwendungsfensters sein. Ferner können sie etwa einen Wert für die Transparenz des Anwendungsfensters umfassen, der bestimmt, in welchem Maße bei einer Überlappung mit anderen Anwendungsfenstern der Inhalt darunter liegender Fenster durchscheint.

Das erfindungsgemäße Verfahren erlaubt daher vorteilhafterweise die Steuerung von Funktionen der Anzeige und Ausführung von Anwendungsprogrammen des Rechnersystems mittels Zeichenketten, insbesondere URLs. Diese eignen sich besonders zu diesem Zweck, weil sie prinzipiell beliebig verlängerbar sind und eine einfache Gliederung der umfassten Informationen möglich ist, beispielsweise durch definierte Trennzeichen. Dabei kann auch eine hohe Kompatibilität verschiedener Anwendungsprogramm und verschiedener Versionen des gleichen Anwendungsprogramms gewährleistet werden: Sind etwa bestimmte Optionen oder Programmzustände, die über eine URL ausgerufen werden, nicht verfügbar, so können die entsprechenden Aufrufe ignoriert werden, während verfügbare Aufrufe unberührt bleiben. Dieses Vorgehen ist bei einer Zeichenkette leicht implementierbar, bei einem Aufruf durch binäre Kommandos dagegen typischerweise schwierig oder unmöglich.

Bei dem erfindungsgemäßen Verfahren ist eine speichermäßige Trennung der parallel ausgeführten Anwendungsprogramme vorgesehen. Das erfindungsgemäße Verfahren erlaubt dadurch eine strikte Trennung der Anwendungsprogramme voneinander, das sogenannte "Sandboxing". Hier können Anwendungsprogramme lediglich auf einen definierten, eigenen Speicherbereich zugreifen. Ein Austausch von Daten zwischen den Anwendungsprogrammen kann mittels der Zeichenketten erfolgen, die einen Verweis auf Daten in einem bestimmten Speicherbereich erlauben, nicht jedoch die Daten selbst. Ferner können Befehle an andere Anwendungsprogramme übertragen werden, um diese etwa "fernzusteuern" und ihre Funktion zu steuern, es wird jedoch kein direkter Zugriff auf die von den anderen Anwendungsprogrammen verwendeten Speicherbereiche des Rechnersystems zugelassen. Dies erlaubt einen besonders sicheren Betrieb des Rechnersystems, da die Wirkung schädlicher Prozesse, etwa bei einem fehlerhaften Anwendungsprogramm oder bei einem Missbrauch des Systems, in ihrer Reichweite begrenzt werden kann. Dies ist insbesondere bei der Anwendung in einem Fahrzeug von Bedeutung, da hier sicherheitsrelevante Einrichtungen des Fahrzeugs betroffen sein können. Ferner kann so der Schutz der Daten des Nutzers verbessert werden.

Erfindungsgemäß wird schließlich anhand des auf die oben beschriebene Art erzeugten Anwendungsfensters eine neue Zeichenkette erzeugt. Dies entspricht einer Aufzeichnung des gegenwärtigen Zustands des Anwendungsfensters mit den jeweiligen Fenstereigenschaften und des ihm zugeordneten Anwendungsprogramms in seinem Programmzustand. Dies erlaubt es, Persistenz für diese Anwendungsfenster zu implementieren. Insbesondere kann anhand der neuen Zeichenkette wieder auf den Zustand des Anwendungsfensters mit dem Anwendungsprogramm zugegriffen werden. Je nach Anwendungsprogramm kann der Programmzustand mehr oder weniger detailliert durch die erzeugte Zeichenfolge festgehalten werden.

Bei einer Ausführung der Erfindung wird die neue Zeichenkette nichtflüchtig in einer Liste von Zeichenketten gespeichert. Dies erlaubt vorteilhafterweise die Erstellung einer Liste, anhand derer verschiedene Anwendungsfenster gemeinsam mit den Zuständen der ihnen zugeordneten Anwendungsprogramme wiederhergestellt werden können. Beispielsweise kann der Nutzer so nach einer unerwünschten Veränderung wieder auf einen vergangenen Zustand zurückgreifen oder es kann eine Zwischenspeicherung eines Zustands des Rechnersystems ausgeführt werden.

Bei einer Weiterbildung wird anhand der Liste von Zeichenketten nach einem Neustart des Rechnersystems die Anzeige mit dem Anwendungsfenster wiederhergestellt. Das erfindungsgemäße Verfahren kann also vorteilhafterweise nicht nur genutzt werden, um den Zustand einzelner Anwendungsfenster zu speichern, sondern durch die Liste von Zeichenketten kann ein globaler Zustand des Rechnersystems gespeichert und zu einem späteren Zeitpunkt wieder aufgerufen werden. Insbesondere muss dazu der Zustand des Systems in einem nichtflüchtigen Speicher gehalten werden, der auch bei einer vollständigen Deaktivierung des Systems nicht gelöscht wird.

Dies ist insbesondere in Fahrzeugen von Bedeutung, bei denen das Rechnersystem beim Parken weitgehend heruntergefahren wird, der Nutzer aber beim Neustart des Systems erwartet, dass er das Rechnersystem im zuletzt aktiven Zustand weiterverwenden kann. Beispielsweise kann so die Wiedergabe von Medien dort fortgesetzt werden, wo sie beim Parken abgebrochen wurde.

Bei einer weiteren Ausbildung der Erfindung ist die Liste von Zeichenketten einem Benutzer zugeordnet. Neben dem über einen Neustart hinaus fortgesetzten Betrieb des Rechnersystems kann so vorteilhafterweise ein Wechsel von verschiedenen Benutzern in analoger Weise behandelt werden: Wird das Rechnersystem von verschiedenen Benutzern genutzt, so sind in vielen Fällen mehrere Benutzerprofile vorgesehen, sodass etwa individuelle Einstellungen vorgenommen werden können. Wird zwischen verschiedenen Benutzern gewechselt, so kann dabei erfindungsgemäß durch Speicherung der Liste von Zeichenketten der Zustand für verschiedene Benutzer gespeichert und für diese wieder aufgerufen werden.

Bei einer Weiterbildung umfasst die Anzeige, wenn ein Basiszustand des Rechnersystems aktiviert ist, eine Basisoberfläche (*home screen*) mit kachelartigen Elementen. Dadurch ist vorteilhafterweise eine Anzeige vorgesehen, die eine übersichtliche Darstellung verschiedener Elemente erlaubt.

Unter "kachelartigen Elementen" werden erfindungsgemäß definierte Bereiche auf der Basisoberfläche bezeichnet, die eine flächige geometrische Form aufweisen und durch welche die Basisoberfläche bedeckt werde kann. Beispielsweise kann dies erfolgen, indem die Basisoberfläche in eine Matrix von *n* * *m* rechteckigen Flächenelementen unterteilt wird, wobei n und m natürliche Zahlen sind und die Flächenelemente die gleichen Abmessungen aufweisen. Die kachelartigen Elemente können sich ihrerseits über eines oder mehrere der Flächenelemente erstrecken. Dies ermöglicht eine übersichtliche Organisation der in der Anzeige enthaltenen Informationen.

Bei einer Ausbildung der Erfindung umfasst die Basisoberfläche im Basiszustand des Rechnersystems zumindest ein auswählbares kachelartiges Element, wobei das kachelartige Element einem Anwendungsprogramm zugeordnet ist. Bei einer Auswahl des kachelartigen Elements wird eine Zeichenkette so erfasst, dass ein Befehl für das zugeordnete Anwendungsprogramm erzeugt und ausgeführt wird und ein Anwendungsfenster für das Anwendungsprogramm erzeugt wird. Dadurch können vorteilhafterweise von der Basisoberfläche aus Anwendungsprogramme aufgerufen und die entsprechenden Anwendungsfenster erzeugt werden und es können Links zur Auswahl angezeigt werden.

Insbesondere wird die Auswahl eines kachelartigen Elements durch eine berührungsempfindliche Oberfläche erfasst, etwa durch einen Touchscreen. Beispielsweise kann eine Folie über einer Anzeigefläche angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und diese Position dem auf der Anzeigefläche angezeigten kachelartigen Element zugeordnet werden. Des Weiteren kann die Dauer der Berührung bei einer bestimmten Position oder innerhalb eines bestimmten Bereichs erfasst werden und es können Gesten erfasst werden, die auf der Oberfläche ausgeführt werden.

Insbesondere ist das kachelartige Element in diesem Fall als Schaltfläche ausgebildet. Darunter wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar ist. Eine Auswahl einer Schaltfläche wird als Eingabe erfasst und es kann eine zugeordnete Funktion ausgeführt werden. Schaltflächen können somit herkömmliche mechanische Schalter oder andere Eingabevorrichtungen ersetzen. Sie können beliebig für eine frei programmierbare Anzeigefläche erzeugt und von dieser angezeigt werden.

Bei einer weiteren Ausbildung umfasst das kachelartige Element eine graphische Repräsentation des zugeordneten Anwendungsprogramms. Dies erleichtert es dem Nutzer vorteilhafterweise, das dem jeweiligen kachelartigen Element zugeordnete Anwendungsprogramm zu erkennen.

Die graphische Repräsentation kann ein Programmsymbol umfassen, das der Nutzer mit dem zugeordneten Anwendungsprogramm verknüpft. Ferner kann sie eine bildhafte Ansicht einer Anzeige des Anwendungsprogramms umfassen, etwa nach Art eines Bildschirmfotos, eines sogenannten *Screenshots,* wobei eine vereinfachte oder reduzierte Darstellung gebildet werden kann.

Bei einer Ausbildung umfasst die Anzeige zumindest zwei Flächenbereiche, insbesondere einen Hauptbereich und einen Informationsbereich. Damit können vorteilhafterweise Informationen innerhalb der Anzeige besonders schnell erfassbar organisiert und ausgegeben werden.

Dabei können die Flächenbereiche getrennt voneinander behandelt und manipuliert werden. Sie stellen insbesondere eigenständige Anwendungsfenster dar, in denen Unterfenster gebildet werden können. So kann etwa die Anzeige einen schmalen Streifen in einem Randbereich und einen größeren daran anschließenden Bereich aufweisen, wobei etwa der Streifen als Informationsbereich zur Anzeige von Informationen von allgemeinem Interesse genutzt wird, während einzelne Anwendungsfenster im größeren Hauptbereich gebildet werden. Beispielsweise kann die Anzeige der Uhrzeit eine Information von allgemeinem Interesse sein und im Informationsbereich dargestellt werden.

Bei dem erfindungsgemäßen Verfahren wird eine Benutzereingabe erfasst, die eine Wischgeste von einer Anfangsposition zu einer Endposition umfasst. Dabei wird der Anfangsposition und der Endposition jeweils ein Anwendungsfenster zugeordnet und es wird der Anfangsposition ein digitales Objekt zugeordnet. Anhand der Wischgeste wird ferner eine weitere Zeichenkette erzeugt und es wird anhand der weiteren Zeichenkette ein Befehl für das digitale Objekt und zumindest eines der den Anwendungsfenstern zugeordneten Anwendungsprogramme erzeugt und ausgeführt.

Dadurch können vorteilhafterweise digitale Objekte zwischen den verschiedenen Anwendungsfenstern zugeordneten Anwendungsprogrammen verschoben oder geteilt werden. Insbesondere wird eine Bedienung mittels sogenanntem "*Drag and Drop*" ermöglicht. Die zu behandelnden digitalen Objekte werden durch die Wischgeste des Nutzers identifiziert, die insbesondere mittels eines Touchscreens erfasst werden kann. Als "Wischgeste" kann aber erfindungsgemäß in einem breiteren Sinne auch eine andere Bewegungsgeste interpretiert werden, etwa eine Bewegung eines Mauszeigers, eine Geste auf einem Touchpad oder eine mittels Drehung eines Bedienknopfes erfasste Bewegung. Durch die Wischgeste wird ermittelt, welches digitale Objekt von wo nach wo verknüpft, kopiert oder bewegt werden soll.

Das digitale Objekt und die durch die Wischgeste angegebene Operation werden dabei durch die weitere Zeichenkette repräsentiert. Insbesondere umfasst die Zeichenkette, die anhand der Wischbewegung erzeugt wird, eine URL zur Lokalisierung des digitalen Objekts sowie Angaben zu der durchzuführenden Operation. Beispielsweise kann ein Suchergebnis, das in einem Anwendungsfenster dargestellt wird, durch eine solche Wischbewegung zu einem Anwendungsprogramm übertragen werden, das in einem anderen Anwendungsfenster angezeigt wird. So kann etwa ein Musiktitel mittels eines Anwendungsprogramms gesucht und mittels eines anderen ausgegeben werden. In diesem Fall wird die mit dem Suchergebnis verknüpfte Information übertragen und als Befehl zur Wiedergabe interpretiert.

Ferner können Daten zwischen Anwendungsprogrammen übergeben werden, ohne dass dazu eine Benutzereingabe nach der oben beschriebenen Art vorausgesetzt wird. In jedem Fall erfolgt dieser Datenaustausch jedoch über eine Zeichenkette, etwa eine URL. Beispielsweise kann so ein neues Anwendungsfenster erzeugt werden oder ein bestehendes Anwendungsfenster mit dem zugeordneten Anwendungsprogramm kann verändert werden.

Bei einer Weiterbildung wird ferner eine Benutzereingabe erfasst und anhand der Benutzereingabe werden Eingaberelevanzwerte für die aktuell ausgeführten Anwendungsprogramme bestimmt. Die Benutzereingabe wird in Abhängigkeit von den Eingaberelevanzwerten an eines der aktuell ausgeführten Anwendungsprogramme übertragen. Dadurch wird vorteilhafterweise eine Benutzereingabe im richtigen Kontext interpretiert und ausgeführt.

Auf diese Weise können insbesondere nicht eindeutig einem Anwendungsfenster zugeordnete Benutzereingaben verarbeitet werden. Beispielsweise kann das Drehen eines Lautstärkereglers als zu einem Medienwiedergabeprogramm gehörig interpretiert werden, während diese Eingabe beispielsweise durch ein Navigationsprogramm ignoriert wird.

Bei einer Ausbildung umfasst die Anzeige ein Anwendungsfenster, das die Anzeigefläche vollständig ausfüllt. Dadurch wird vorteilhafterweise eine Vollbilddarstellung bereitgestellt. Dabei kann als "vollständiges" Ausfüllen der Anzeigefläche auch ein Ausfüllen eines der oben genannten Anzeigebereiche bedeuten. Beispielsweise kann dadurch eine Informationsleiste, etwa mit der Anzeige einer Uhrzeit, dauerhaft angezeigt werden, während der Hauptbereich der Anzeige vollständig durch ein Anwendungsfenster ausgefüllt wird.

Bei einer Ausbildung werden zumindest zwei Anwendungsprogramme gleichzeitig ausgeführt und die Anzeige umfasst für jedes der Anwendungsprogramme je ein eigenes Anwendungsfenster. Dabei wird den Anwendungsfenstern ein Prioritätswert zugeordnet und die Anzeige mit den Anwendungsfenstern wird ferner anhand des Prioritätswerts erzeugt.

Dies erlaubt vorteilhafterweise die Darstellung mehrerer Anwendungsfenster in einer Anzeige. Insbesondere kann anhand der Prioritätswerte verschiedener Anwendungsfenster bestimmt werden, wie die Anwendungsfenster geschichtet werden sollen, welche Informationen also im Vorder- beziehungsweise Hintergrund angezeigt werden sollen. Dies kann beispielsweise anhand von Zeichen innerhalb der zum Anwendungsfenster gehörigen Zeichenkette bestimmt werden, etwa wenn ein Anwendungsfenster mit einer Kennzeichnung als "*type*=*alert*" (z.B: für eine Warnmeldung) mit einem höheren Prioritätswert bewertet wird als mit "*type*=*media*" (z.B. für eine Anzeige einer Medienwiedergabe) oder "*type*=*navigation*" (z.B. für eine Anzeige eines Navigationssystems). Auf diese Weise kann sichergestellt werden, dass Informationen mit hoher Bedeutung für den Nutzer gegenüber anderen Informationen hervorgehoben dargestellt und nicht verdeckt werden.

Bei einer weiteren Ausbildung weisen die Anwendungsfenster vollständig oder teilweise transparente Bereiche auf, wobei die Anzeige anhand der Prioritätswerte so erzeugt wird, dass hinter den jeweiligen Anwendungsfenstern andere Anwendungsfenster sichtbar sind. Dies erlaubt vorteilhafterweise eine besonders ansprechende Gestaltung der Anzeige und bietet dem Nutzer zudem die Möglichkeit zu erkennen, ob und welche anderen Informationen durch das gegenwärtig im Vordergrund angezeigte Anwendungsfenster verdeckt werden.

Bei einer Weiterbildung der Erfindung wird die Größe, die Position und/oder die Transparenz des Anwendungsfensters anhand einer Benutzereingabe und/oder anhand von Daten des Anwendungsprogramms bestimmt. Dies erlaubt eine freie Positionierbarkeit und Dimensionierbarkeit der Anwendungsfenster bei ihrer Erzeugung oder durch Eingaben des Nutzers.

Beispielsweise kann die Zeichenkette, anhand derer das Anwendungsfenster zu einem Anwendungsprogramm erzeugt wird, Informationen zu Größe und Position sowie zur Transparenz des Anwendungsfensters umfassen. Ferner kann das Anwendungsprogramm selbst mit der Erzeugung des Anwendungsfensters interagieren, beispielsweise wenn bestimmte Anwendungsprogramme eine definierte Größe des Anwendungsfensters erfordern. In diesem Fall kann das aufgerufene Anwendungsprogramm die Zeichenkette modifizieren oder entsprechende Rückmeldungen an das Rechnersystem ausgeben. Ferner können Nutzereingaben so erfasst werden, dass damit Anwendungsfenster innerhalb der Anzeige frei positioniert und verschoben oder in ihrer Größe und Transparenz verändert werden. Dies kann beispielsweise dadurch erfasst werden, dass der Nutzer auf einem Touchscreen eine Wischbewegung von einem Bereich am Rand des Anwendungsfensters zu einer anderen Position ausführt und dadurch das Anwendungsfenster verschoben wird.

Ferner kann eine Benutzereingabe erfasst werden, die eine Betätigungsposition umfasst, wobei der Betätigungsposition ein Anwendungsfenster zugeordnet wird. Anhand der Benutzereingabe kann eine weitere Zeichenkette erzeugt werden und es kann anhand der Zeichenkette das zugeordnete Anwendungsfenster nicht mehr in der Anzeige angezeigt werden. Dies ermöglicht ein Schließen eines Anwendungsfensters. Insbesondere kann an der Betätigungsposition eine dem Anwendungsfenster zugeordnete Schaltfläche angezeigt werden, etwa ein "Schließen"-Symbol. Das Schließen des Anwendungsfensters erfolgt ebenfalls durch Erzeugung einer Zeichenkette und Übergabe an das Rechnersystem, wobei in diesem Fall zumindest das Anwendungsfenster identifiziert werden muss, wodurch konsequenterweise auch das mit diesem verknüpfte Anwendungsprogramm identifiziert wird. Es kann dabei auch die Ausführung des Anwendungsprogramms beendet werden.

Das erfindungsgemäße Rechnersystem, das in einem Fahrzeug angeordnet ist, umfasst eine Steuereinheit, durch die Graphikdaten einer Anzeige erzeugbar sind und eine Anzeigeeinheit, durch welche die Graphikdaten ausgebbar sind. Es umfasst ferner eine Erfassungseinheit, durch die eine Zeichenkette erfassbar ist, und eine Recheneinheit, durch die anhand der Zeichenkette ein Befehl für ein Anwendungsprogramm erzeugbar und ausführbar ist. Dabei betrifft der Befehl einen bestimmten Programmzustand des Anwendungsprogramms und anhand der Zeichenkette ist innerhalb der Anzeige ein Anwendungsfenster erzeugbar, das Fenstereigenschaften aufweist und das dem Anwendungsprogramm zugeordnet ist. Das Anwendungsfenster wird dabei in Abhängigkeit von dem Programmzustand des Anwendungsprogramms erzeugt. Dabei ist durch die Recheneinheit anhand des Anwendungsfensters und des Anwendungsprogramms eine neue Zeichenkette erzeugbar, wobei eine Benutzereingabe erfassbar ist, die eine Wischgeste von einer Anfangsposition zu einer Endposition umfasst, wobei der Anfangsposition und der Endposition jeweils ein Anwendungsfenster zuordenbar ist, und wobei der Anfangsposition ein digitales Objekt zuordenbar ist, anhand der Wischgeste eine weitere Zeichenkette erzeugbar ist und anhand der weiteren Zeichenkette ein Befehl für das digitale Objekt und zumindest eines der den Anwendungsfenstern zugeordneten Anwendungsprogramme erzeugbar und ausführbar ist, wobei die weitere Zeichenkette eine URL zur Lokalisierung eines digitalen Objekts sowie Angaben zu einer durchzuführenden Operation umfasst.

Das erfindungsgemäße Rechnersystem ist insbesondere ausgebildet, das vorstehend beschriebene erfindungsgemäße Verfahren zu implementieren. Das Rechnersystem weist somit dieselben Vorteile auf wie das erfindungsgemäße Verfahren.

Das Rechnersystem kann eine Speichereinheit umfassen, durch welche die Zeichenketten nichtflüchtig speicherbar sind. Dadurch kann Persistenz für Anwendungsfenster und Anwendungsprogramme erreicht werden. Dies bedeutet insbesondere, dass der Zustand des Systems in Teilen oder in seiner Gesamtheit durch URLs repräsentiert werden kann, die ihrerseits etwa in einer Liste speicherbar sind und nach einem Neustart des Systems eine Wiederherstellung der gespeicherten Zustände erlauben.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Rechnersystems,
- Figur 2: zeigt eine Anzeige im Basiszustand des Rechnersystems, erzeugt anhand eines Ausführungsbeispiels des erfindungsgemäßen Verfahrens;
- Figuren 3A und 3B: zeigen weitere Anzeigen des Rechnersystems, erzeugt anhand eines Ausführungsbeispiels des erfindungsgemäßen Verfahrens;
- Figuren 4A und 4B: zeigen weitere Anzeigen des Rechnersystems mit überlappenden Fenstern; und
- Figur 5: zeigt wird ein Ausführungsbeispiel der Übergabe eines digitalen Objekts zwischen Anwendungsfenstern innerhalb der erfindungsgemäß erzeugten Anzeige.

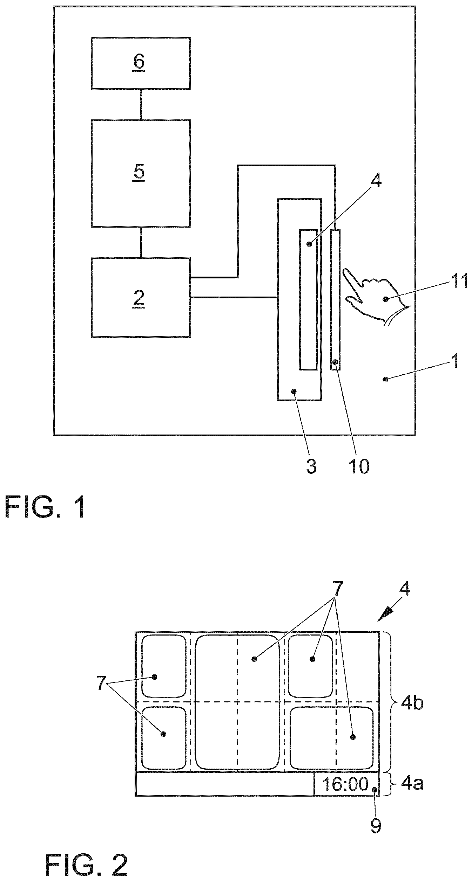

Mit Bezug zu Figur 1 wird ein Fahrzeug mit einem Ausführungsbeispiel des erfindungsgemäßen Rechnersystems erläutert.

Ein Fahrzeug 1 umfasst eine Recheneinheit 5, mit der eine Speichereinheit 6 und eine Steuereinheit 2 gekoppelt sind. Mit der Steuereinheit 2 sind ferner eine Anzeigeeinheit 3 mit einer Anzeigefläche 4 und eine Erfassungseinheit 10 gekoppelt. Im vorliegenden Fall umfasst die Erfassungseinheit 10 eine auf der Anzeigefläche 4 angeordnete berührungsempfindliche Oberfläche. Es wird in diesem Fall ein sogenannter Touchscreen bereitgestellt. Beispielsweise kann eine Folie über der Anzeigefläche 4 angeordnet sein, mit welcher die Position einer Berührung eines Betätigungsobjekts 11 detektiert werden kann. Bei dem Betätigungsobjekt 11 handelt es sich insbesondere um die Fingerspitze 11 eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze 11 des Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 4 angezeigten graphischen Objekt zugeordnet werden. Des Weiteren kann die Länge der Berührung bei einer bestimmten Position oder innerhalb eines bestimmten Bereichs erfasst werden.

In weiteren Ausführungsbeispielen kann die Erfassungseinheit 10 alternativ oder zusätzlich eine andere Vorrichtung umfassen, durch die Eingaben erfassbar sind, etwa einen analogen Regler. Die Erfassungseinheit 10 kann auch trennbar datentechnisch mit der Steuereinheit 2 verbunden sein. Die datentechnische Verbindung kann dabei insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Ferner kann die Datenverbindung durch den Anschluss eines Datenkabels erfolgen. Die Verbindung kann auch über eine andere Einheit hergestellt werden, die selbst eine Verbindung zu dem externen Server herstellen kann. Beispielsweise kann eine datentechnische Verbindung zwischen der Steuereinheit 2 und einer mobilen Einheit, etwa einem Mobiltelefon, hergestellt werden, beispielsweise durch ein Datenkabel oder eine Funkverbindung, etwa per Bluetooth.

Mit Bezug zu den Figuren 1 und 2 wird ein Ausführungsbeispiel des erfindungsgemäßen Verfahrens erläutert. Dabei zeigt Figur 2 eine Anzeige im Basiszustand des Rechnersystems.

Die Steuereinheit 2 erzeugt Graphikdaten, insbesondere mithilfe eines Fenstermanagers, und überträgt sie an die Anzeigeeinheit 3, wo sie ausgegeben werden. Zur Erzeugung eines Anwendungsfensters wird eine Zeichenkette erfasst, die entweder anhand eines Nutzereingabe erzeugt wird oder von der Speichereinheit 6 erfasst wird. Anhand der Zeichenkette wird ein Befehl für ein Anwendungsprogramm erzeugt und ausgeführt sowie ein dazugehöriges Anwendungsfenster erzeugt.

Zum Beispiel wird der Basiszustand des Rechnersystems aktiviert, indem eine bestimmte Taste betätigt wird. In diesem Fall entspricht das Betätigen der Taste der Übergabe einer Zeichenkette an das Rechnersystem, wobei die Zeichenkette alle zur Erzeugung der Anzeige im Basiszustand erforderlichen Informationen umfasst, etwa "*state*=*home*". Es wird anhand dieser Zeichenkette ein Befehl erzeugt, durch den der Basiszustand des Systems aktiviert wird. Durch die Steuereinheit 2 des Fahrzeugs 1 werden entsprechende Graphikdaten der Anzeige erzeugt und auf der Anzeigefläche 4 ausgegeben. Von diese Anzeige aus kann der Nutzer verschiedene Funktionen des Rechnersystems aufrufen, indem er anhand der Erfassungseinheit 10 Eingaben vornimmt.

Die Anzeigefläche 4 im Basiszustand ist in dem dargestellten Ausführungsbeispiel in zwei Bereiche unterteilt, einen Informationsbereich 4a und einen Hauptbereich 4b. Der Informationsbereich 4a erstreckt sich über die gesamte Breite der Anzeigefläche 4 und dient dazu, Informationen von allgemeinem Interesse darzustellen. Im dargestellten Fall ist dies insbesondere die Anzeige der Uhrzeit 9, aber es können hier beispielsweise auch Anzeigeelemente dargestellt werden, die anzeigen, welche Anwendungsprogramme gerade geöffnet sind.

Der Hauptbereich 4b ist durch ein Raster in *2* * *5* Bereiche unterteilt, in Figur 2 angedeutet durch gestrichelte Linien. Dieses Raster ist beispielhaft zu verstehen und kann je nach Ausführungsbeispiel unterschiedlich gebildet sein, etwa mit verschiedenen Abmessungen. Im Hauptbereich 4b werden kachelartige Elemente 7 verschiedener Größen dargestellt, die sich über ein Feld oder mehrere benachbarte Felder des Rasters erstrecken. Die Felder des Rasters stellen also die elementaren Einheiten der dargestellten kachelartigen Elemente 7 dar.

Die kachelartigen Elemente 7 können als eigenständige Einheiten der Darstellung gebildet werden, insbesondere können sie einzelnen Anwendungsprogrammen zugeordnet sein. Beispielsweise kann ein kachelartiges Element 7 als Bedienfläche gebildet sein und bei einer Betätigung, etwa durch Auswahl des kachelartigen Elements 7, kann das zugeordnetes Anwendungsprogramm gestartet werden. Das heißt, wenn der Nutzer ein kachelartiges Element 7 betätigt, wird dadurch eine Zeichenkette erzeugt und an das System übergeben. Beispielsweise kann die Zeichenkette einen Link umfassen, etwa zum Aufruf einer lokalen Webseite. Anhand dieser Zeichenkette wird nun ein Befehl erzeugt, der einen bestimmten Programmzustand eines Anwendungsprogramms betrifft. Bei dem Beispiel einer Webseite kann ein Browser-Programm gestartet werden, wobei die anzuzeigende Adresse der Webseite übergeben wird. Die Zeichenkette definiert also, was das zugeordnete Anwendungsprogramm tun soll.

Mit dem Aufruf des Anwendungsprogramms wird auch ein Anwendungsfenster innerhalb der Anzeige erzeugt, das bestimmte Eigenschaften aufweist. Das Anwendungsfenster wird dabei zum Einen in Abhängigkeit von dem Programmzustand des Anwendungsprogramms erzeugt, beispielsweise in einer zur Anzeige der Ausgabe geeigneten Größe. Ferner können durch die Zeichenkette auch Daten zu Fenstereigenschaften übergeben werden, um das Fenster zu modifizieren.

Ferner können innerhalb der Bereiche der kachelartigen Elemente 7 Daten der jeweils zugeordneten Anwendungsprogramme ausgegeben werden. Die Größe der kachelartigen Elemente 7 ist veränderbar, das heißt, sie können beispielsweise durch eine geeignete Zeichenkette vergrößert oder verkleinert werden.

Um dem Nutzer die Auswahl des gewünschten Anwendungsprogramms zu erleichtern, werden im Bereich der kachelartigen Elemente 7 graphische Darstellungen angezeigt, die das jeweils zugeordnete Anwendungsprogramm repräsentieren. Dies kann insbesondere durch eine verkleinerte Ansicht der von dem Anwendungsprogramm bereitgestellten Anwendungsoberfläche dargestellt werden, sodass der Nutzer leicht erkennt, was er durch ein Betätigen des entsprechenden kachelartigen Elements 7 auswählt.

Die Bedienung erfolgt grundlegend über Zeichenketten, im dargestellten Fall über URLs. Die Elemente der Anzeige können durch URLs beschrieben werden, Wechselwirkungen zwischen ihnen werden durch URLs vermittelt und auch Interaktionen des Nutzers können durch URLs erfolgen. Der Begriff "URL" (kurz für "*uniform resource locator*") wird dabei in einem weiten Sinn verstanden und umfasst nicht nur Informationen zur Lokalisierung eines digitalen Objekts, sondern auch weitere Informationen. Beispielsweise kann der Aufruf eines Anwendungsprogramms durch eine URL erfolgen, wobei diese neben einem Speicherort des Anwendungsprogramms auch Informationen zur gewünschten Darstellung, etwa Größe, Position und Transparenz des entsprechend erzeugten Anwendungsfensters, umfassen kann. Ferner können weitere Informationen bei dem Aufruf übergeben werden, beispielsweise ein Suchbegriff beim Aufruf einer Suchmaschine oder ein Titel eines Musikstücks beim Aufruf eines Medienprogramms.

So kann etwa im oben dargestellten Fall eines Aufrufs eines Links wie "http://helpfiles/index.html" ein Browser der dazugehörigen Seite gestartet werden. Fenstereigenschaften können ebenfalls mittels der Zeichenkette übergeben werden, etwa durch Verwendung von Stichworten zur Größe und Position des Anwendungsfensters wie "*window*=*fullscreen*" oder "*windowsize*=*(500x500), windowposition*=*(0,0)*", oder zur Transparenz des Anwendungsfensters wie "*transpareney*=*off*".

Zeichenketten werden erfindungsgemäß allerdings auch anhand eines Anwendungsfensters und des zugeordneten Anwendungsprogramms erzeugt, wobei insbesondere des Programmzustand des Anwendungsprogramms berücksichtigt wird. Beispielsweise kann eine neue Zeichenkette erzeugt werden, durch die der aktuelle Zustand eines Anwendungsprogramms und des entsprechenden Anwendungsfensters gespeichert wird. Ein Browser kann etwa beendet und der aktuelle Zustand als Zeichenkette gespeichert werden, sodass ein Aufruf der Zeichenkette den aktuellen Zustand wieder herstellt. Der Nutzer kann dann mit der Verwendung des Browsers an der Stelle fortfahren, an der er ihn zuvor beendet hat.

Auf diese Weise kann auch eine Wiederherstellung des gesamten Systemzustands implementiert werden: Dazu wird die neue Zeichenkette, die anhand des Fensters und des Anwendungsprogramms erzeugt wurde, in einer Liste von Zeichenketten nichtflüchtig gespeichert, im dargestellten Beispiel von der Speichereinheit 6. Wird nun das System beendet, so kann anhand der gespeicherten Liste von Zeichenketten der Systemzustand wiederhergestellt werden.

Diese Liste von Zeichenketten kann auch einem einzelnen Nutzer zugeordnet sein, etwa durch ein Benutzerprofil. Wird zwischen verschiedenen Benutzerprofilen gewechselt, so wird insbesondere auf die Liste von Zeichenketten des jeweils aktuellen Benutzerprofils zugegriffen und der Systemzustand nach den Vorgaben dieses Nutzers hergestellt.

Der Übergang zwischen verschiedenen Anzeigen, etwa beim Erzeugen eines neuen Anwendungsfensters oder beim Vernichten desselben, sowie der Wechsel zwischen verschiedenen Zuständen wird animiert dargestellt, insbesondere durch die Darstellung einer Bewegung, die etwa das Entstehen eines Anwendungsfensters darstellt.

Die einzelnen Anwendungsprogramme erhalten dabei keinen direkten Zugriff auf den Speicherbereich anderer Anwendungsprogramme, sondern werden nach dem Prinzip des "Sandboxing" so erzeugt, dass der von jedem Anwendungsprogramm beeinflussbare Speicherbereich jeweils isoliert für sich betrachtet wird. Der Austausch von Daten zwischen Anwendungsprogrammen ist mittels URLs möglich, sodass ein Anwendungsprogramm zwar ein anderes aufrufen, beeinflussen oder mit ihm Daten austauschen kann, dieses aber nicht direkt steuern kann. Besonders bei der Anwendung in Fahrzeugen stellt dies besonderes ein Sicherheitsmerkmal des Systems dar.

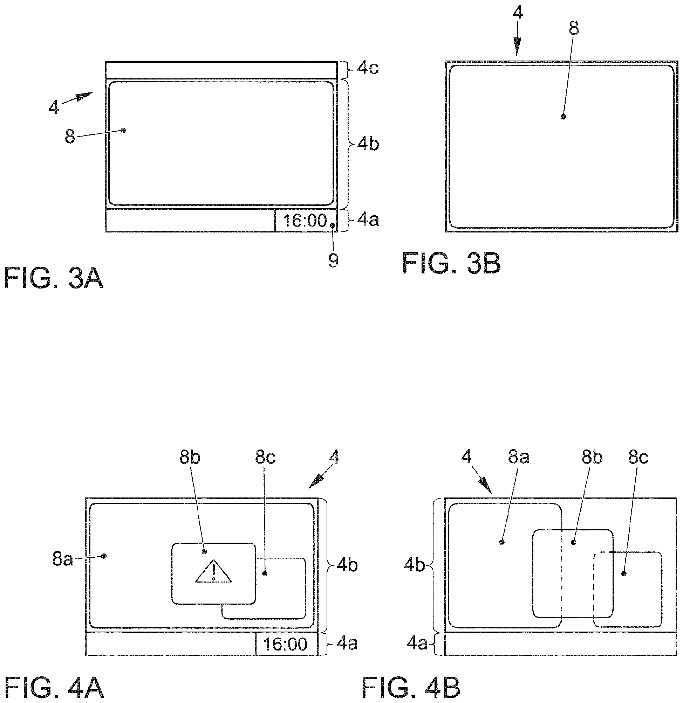

Mit Bezug zu Figuren 3A und 3B werden weitere Anzeigen des Rechnersystems erläutert, wie sie anhand eines Ausführungsbeispiels des erfindungsgemäßen Verfahrens erzeugt werden. Dabei wird von dem oben mit Bezug zu den Figuren 1 und 2 erläuterten System ausgegangen.

Bei dem in Figur 3A dargestellten Fall wird ein Anwendungsprogramm ausgeführt und seine Daten werden in einem Anwendungsfenster 8 im Vollbildmodus angezeigt, wobei es hier den gesamten Hauptbereich 4b der Anzeigefläche 4 einnimmt. Beispielsweise kann der Aufruf eines Anwendungsprogramms mittels einer URL der Form "*fullscreen:*//*apps*/*media*/*index.html*" erfolgen. Die Anzeige im Informationsbereich 4a ist dagegen gegenüber der in Figur 2 gezeigten Anzeige unverändert. Die Anzeige umfasst ferner eine oberen Bereich 4c, der analog zu dem unten gebildeten Informationsbereich 4a gebildet ist. Ähnlich wie bei diesem können in dem oberen Bereich 4c Informationen von anwendungsübergreifendem Interesse ausgegeben werden.

In dem in Figur 3B dargestellten Fall nimmt eine Vollbilddarstellung des Anwendungsfensters 8 dagegen tatsächlich die gesamte Anzeigefläche 4 ein. Dies erlaubt eine möglichst großflächige Darstellung von Informationen. Je nach Implementierung des erfindungsgemäßen Rechnersystems können beide Darstellungsformen möglich sein, wobei in diesem Fall die Größe des Anwendungsfensters zur Darstellung eines Anwendungsprogramms Bestandteil einer das Anwendungsprogramm aufrufenden URL sein kann oder durch das Anwendungsprogramm bedingt sein kann. Beispielsweise kann eine URL den Aufruf "*mode*=*full-total*" oder "*mode*=*full-main*" umfassen, um die Größe des dargestellten Anwendungsfensters zu definieren.

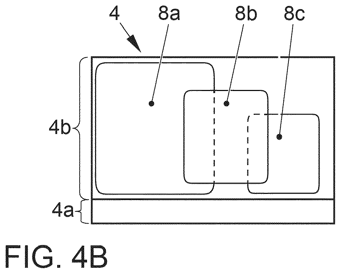

Mit Bezug zu den Figuren 4A und 4B werden Anzeigen des Rechnersystems mit überlappenden Fenstern erläutert. Es wird dabei von dem oben erläuterten erfindungsgemäßen Rechnersystem ausgegangen.

Bei dem in Figur 4A dargestellten Fall werden im Hauptbereich 4a der Anzeigefläche 4 drei Anwendungsfenster 8a, 8b, 8c dargestellt. Jedes dieser Anwendungsfenster 8a, 8b, 8c wird erzeugt, indem eine URL mit Informationen zur Größe und Position der jeweils von ihnen eingenommenen Fläche auf der Anzeigefläche 4 verarbeitet wird. Im dargestellten Fall werden die Anwendungsfenster 8a, 8b 8c überlappend dargestellt, wobei die Fläche eines im Vollbild dargestellten Anwendungsfensters 8a teilweise durch die anderen Anwendungsfenster 8b, 8c überdeckt wird, die sich ihrerseits teilweise überdecken. Im Vordergrund wird dabei ein Anwendungsfensters 8b mit einer Warnmeldung angezeigt. Die Reihenfolge der übereinander geschichtet angezeigten Anwendungsfenster 8a, 8b, 8c wird dabei anhand der URLs zu ihrer Erzeugung festgelegt. Beispielsweise sind bestimmte Typen von Anwendungsfenstern 8a, 8b, 8c definiert, denen eine Priorität zugeordnet wird. Beispielsweise können dazu URLs wie "*popup:*//*system*/*oil*" oder "*popover:*//*apps*/*speechdialog*" gebildet und klassifiziert werden.

Der Fenstermanager der Steuereinheit 2 erzeugt die Anzeige dann so, dass alle Anwendungsfenster entsprechend ihrer jeweiligen Prioritäten dargestellt werden. Beispielsweise können auch Größe, Position und Transparenz der Anwendungsfenster durch die Priorität beeinflusst werden, wenn etwa ein Anwendungsfenster besonders hoher Priorität weniger Transparenz aufweist, um etwa eine Warnmeldung besser erfassbar darzustellen.

Bei der Überlagerung von Anwendungsfenstern 8a, 8b, 8c können auch Inhalte mehrere Ebenen angezeigt werden, insbesondere durch eine transparente Darstellung, wie sie in Figur 4B durch gestrichelt angedeutete Ränder der durch eines der Anwendungsfenster 8b überdeckten Anwendungsfenster 8a, 8c angedeutet ist. Die Transparenz der dargestellten Anwendungsfenster 8a, 8b, 8c kann mittels der URL bestimmt werden, die dem jeweiligen Anwendungsfenster 8a, 8b, 8c zugeordnet ist. Dabei kann der Grad der Transparenz, das heißt der Anteil der von darunter liegenden Anwendungsfenstern 8a, 8c "durchscheinenden" Informationen variiert werden.

Insbesondere sieht das Beispiel vor, dass der Nutzer durch Benutzereingaben die Position und Größe, gegebenenfalls auch die Transparenz der Anwendungsfenster ändern kann. Beispielsweise kann durch eine Wischgeste ein Anwendungsfenster von einer Position zu einer anderen bewegt werden oder die Größe kann angepasst werden.

Wird eine Benutzereingabe erfasst, während mehrere Anwendungsprogramme ausgeführt und etwa in mehreren Anwendungsfenstern angezeigt werden, so muss bestimmt werden, welches Anwendungsprogramm diese Benutzereingabe betrifft. Dazu werden Eingaberelevanzwerte für die Anwendungsprogramme und insbesondere für jede Instanz eines Anwendungsprogramms bestimmt, die angeben, wie wahrscheinlich die Benutzereingabe das jeweilige Anwendungsprogramm betrifft. Dies kann beispielsweise erfolgen, indem die Position einer Berührung des Touchscreens 10 ausgewertet wird oder indem eine generelle Zuordnung bestimmter Eingabevorrichtungen zu bestimmten Anwendungsprogrammen berücksichtigt wird.

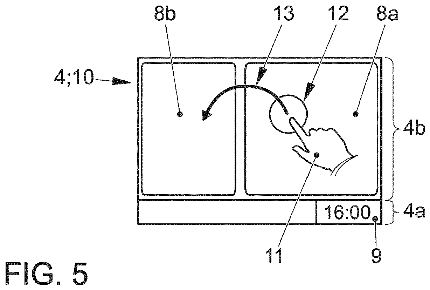

Mit Bezug zu Figur 5 wird ein Ausführungsbeispiel der Übergabe eines digitalen Objekts zwischen Anwendungsfenstern innerhalb der erfindungsgemäß erzeugten Anzeige erläutert. Dabei wird von dem oben beschriebenen erfindungsgemäßen Rechnersystem ausgegangen.

Auf der Anzeigefläche 4 sind der Informationsbereich 4a und der Hauptbereich 4b dargestellt. In letzterem sind zwei Anwendungsfenster 8a, 8b rechts und links dargestellt, wobei in dem rechten Anwendungsfenster 8a ein graphisches Objekt 12 dargestellt wird. Dieses ist mit einem digitalen Objekt verknüpft, beispielsweise einer Datei. Ferner kann das digitale Objekt auch ein Befehl an das Rechnersystem sein oder eine Datenstruktur, etwa ein Kategorie einer Suchanfrage. Dem digitalen Objekt ist eine URL zugeordnet, die es repräsentiert. Über der Anzeigefläche 4 ist eine berührungsempfindliche Oberfläche angeordnet, es handelt sich also auch um einen Touchscreen 10. Der Nutzer berührt mit der Fingerspitze 11 die Oberfläche des Touchscreens 10 an der Position des graphischen Objekts 12 und führt eine Wischgeste entlang des in der Zeichnung dargestellten Pfeils 13 aus, wobei die die Wischgeste im Bereich des linken Anwendungsfensters 8b endet.

Es wird nun eine URL erzeugt, die Informationen über das mit dem graphischen Objekt 12 verknüpfte digitale Objekt umfasst sowie Informationen zu dem Ausgangs-Anwendungsfenster 8a und dem Ziel-Anwendungsfenster 8b. Das Anwendungsprogramm, das dem Ziel-Anwendungsfenster 8b zugeordnet ist, kann nun auf das digitale Objekt zugreifen und es bearbeiten, es wird also anhand der URL ein Befehl für das Anwendungsprogramm des Ziel-Anwendungsfensters erzeugt und ausgeführt.

### Bezugszeichenliste

- 1: Fahrzeug
- 2: Steuereinheit
- 3: Anzeigeeinheit
- 4: Anzeigefläche
- 4a: Informationsbereich
- 4b: Hauptbereich
- 4c: oberer Bereich
- 5: Recheneinheit
- 6: Speichereinheit
- 7: Kachelartiges Element
- 8: Anwendungsfenster, Vollbilddarstellung
- 8a, 8b, 8c: Anwendungsfenster
- 9: Uhrzeit
- 10: Erfassungseinheit, Touchscreen
- 11: Betätigungsobjekt, Finger des Nutzers
- 12: Graphisches Objekt
- 13: Pfeil

## Patentansprüche

1. Verfahren zum Betreiben eines Rechnersystems in einem Fahrzeug (1), bei dem Graphikdaten einer Anzeige erzeugt und ausgegeben werden;
zumindest eine Zeichenkette erfasst wird;
anhand der zumindest einen Zeichenkette ein Befehl für ein Anwendungsprogramm erzeugt und ausgeführt wird, wobei der Befehl einen bestimmten Programmzustand des Anwendungsprogramms betrifft;
ferner anhand der Zeichenkette innerhalb der Anzeige ein Anwendungsfenster (8, 8a, 8b, 8c) erzeugt wird, das Fenstereigenschaften aufweist und das dem Anwendungsprogramm zugeordnet ist, wobei das Anwendungsfenster (8, 8a, 8b, 8c) in Abhängigkeit von dem Programmzustand des Anwendungsprogramms erzeugt wird; und
anhand des Anwendungsfensters (8, 8a, 8b, 8c) und des Anwendungsprogramms eine neue Zeichenkette erzeugt wird, **dadurch gekennzeichnet, dass** eine Benutzereingabe erfasst wird, die eine Wischgeste von einer Anfangsposition zu einer Endposition umfasst, wobei der Anfangsposition und der Endposition jeweils ein Anwendungsfenster (8a, 8b) zugeordnet wird, und wobei der Anfangsposition ein digitales Objekt zugeordnet wird,
anhand der Wischgeste eine weitere Zeichenkette erzeugt wird und
anhand der weiteren Zeichenkette ein Befehl für das digitale Objekt und zumindest eines der den Anwendungsfenstern (8a, 8b) zugeordneten Anwendungsprogramme erzeugt und ausgeführt wird, wobei die weitere Zeichenkette eine URL zur Lokalisierung eines digitalen Objekts sowie Angaben zu einer durchzuführenden Operation umfasst.

2. Verfahren nach Anspruch 1,
**dadurch gekennzeichnet, dass**
die neue Zeichenkette nichtflüchtig in einer Liste von Zeichenketten gespeichert wird.

3. Verfahren nach Anspruch 2,
**dadurch gekennzeichnet, dass**
anhand der Liste von Zeichenketten nach einem Neustart des Rechnersystems die Anzeige mit dem Anwendungsfenster (8, 8a, 8b, 8c) wiederhergestellt wird.

4. Verfahren nach Anspruch 2 oder 3,
**dadurch gekennzeichnet, dass**
die Liste von Zeichenketten einem Benutzer zugeordnet ist.

5. Verfahren nach einem der vorhergehenden Ansprüche,
**dadurch gekennzeichnet, dass,**
wenn ein Basiszustand des Rechnersystems aktiviert ist, die Anzeige eine Basisoberfläche mit kachelartigen Elementen (7) umfasst.

6. Verfahren nach Anspruch 5,
**dadurch gekennzeichnet, dass,**
die Basisoberfläche im Basiszustand des Rechnersystems zumindest ein auswählbares kachelartiges Element (7) umfasst, wobei das kachelartige Element (7) einem Anwendungsprogramm zugeordnet ist und
bei einer Auswahl des kachelartigen Elements (7) eine Zeichenkette so erfasst wird, dass ein Befehl für das zugeordnete Anwendungsprogramm erzeugt und ausgeführt wird und ein Anwendungsfenster (8, 8a, 8b, 8c) für das Anwendungsprogramm erzeugt wird.

7. Verfahren nach Anspruch 5 oder 6,
**dadurch gekennzeichnet, dass**
das kachelartige Element (7) eine graphische Repräsentation des zugeordneten Anwendungsprogramms umfasst.

8. Verfahren nach einem der vorhergehenden Ansprüche,
**dadurch gekennzeichnet, dass,**
die Anzeige zumindest zwei Flächenbereiche (4a, 4b, 4c) umfasst, insbesondere einen Hauptbereich (4b) und einen Informationsbereich (4a).

9. Verfahren nach einem der vorhergehenden Ansprüche, **dadurch gekennzeichnet, dass**
ferner eine Benutzereingabe erfasst wird,
anhand der Benutzereingabe Eingaberelevanzwerte für die aktuell ausgeführten Anwendungsprogramme bestimmt werden und
die Benutzereingabe in Abhängigkeit von den Eingaberelevanzwerten an eines der aktuell ausgeführten Anwendungsprogramme übertragen wird.

10. Verfahren nach einem der vorhergehenden Ansprüche, **dadurch gekennzeichnet, dass,**
die Anzeige ein Anwendungsfenster (8, 8a, 8b, 8c) umfasst, das die Anzeigefläche (4, 4b) vollständig ausfüllt.

11. Verfahren nach einem der vorhergehenden Ansprüche, **dadurch gekennzeichnet, dass,**
zumindest zwei Anwendungsprogramme gleichzeitig ausgeführt werden und
die Anzeige für jedes der Anwendungsprogramme je ein eigenes Anwendungsfenster (8, 8a, 8b, 8c) umfasst,
wobei den Anwendungsfenstern (8, 8a, 8b, 8c) ein Prioritätswert zugeordnet wird und die Anzeige mit den Anwendungsfenstern (8, 8a, 8b, 8c) ferner anhand des Prioritätswerts erzeugt wird.

12. Verfahren nach Anspruch 11, **dadurch gekennzeichnet, dass**
die Anwendungsfenster (8, 8a, 8b, 8c) vollständig oder teilweise transparente Bereiche aufweisen, wobei die Anzeige anhand der Prioritätswerte so erzeugt wird, dass hinter den jeweiligen Anwendungsfenstern (8, 8a, 8b, 8c) andere Anwendungsfenster (8, 8a, 8b, 8c) sichtbar sind.

13. Verfahren nach einem der vorhergehenden Ansprüche, **dadurch gekennzeichnet, dass**
die Größe und/oder die Position und/oder die Transparenz des Anwendungsfensters (8, 8a, 8b, 8c) anhand einer Benutzereingabe und/oder anhand von Daten des Anwendungsprogramms bestimmt wird.

14. Rechnersystem in einem Fahrzeug (1) mit einer Steuereinheit (2), durch die Graphikdaten einer Anzeige erzeugbar sind;
einer Anzeigeeinheit (3), durch welche die Graphikdaten ausgebbar sind;
einer Erfassungseinheit (10), durch die eine Zeichenkette erfassbar ist;
einer Recheneinheit (5), durch die anhand der Zeichenkette ein Befehl für ein Anwendungsprogramm erzeugbar und ausführbar ist, wobei der Befehl einen bestimmten Programmzustand des Anwendungsprogramms betrifft, sowie anhand der Zeichenkette innerhalb der Anzeige ein Anwendungsfenster (8, 8a, 8b, 8c) erzeugbar ist, das Fenstereigenschaften aufweist und das dem Anwendungsprogramm zugeordnet ist, wobei das Anwendungsfenster (8, 8a, 8b, 8c) in Abhängigkeit von dem Programmzustand des Anwendungsprogramms erzeugt wird; wobei
durch die Recheneinheit (5) anhand des Anwendungsfensters (8, 8a, 8b, 8c) und des Anwendungsprogramms eine neue Zeichenkette erzeugbar ist, **dadurch gekennzeichnet, dass** eine Benutzereingabe erfassbar ist, die eine Wischgeste von einer Anfangsposition zu einer Endposition umfasst, wobei der Anfangsposition und der Endposition jeweils ein Anwendungsfenster (8a, 8b) zuordenbar ist, und wobei der Anfangsposition ein digitales Objekt zuordenbar ist,
anhand der Wischgeste eine weitere Zeichenkette erzeugbar ist und
anhand der weiteren Zeichenkette ein Befehl für das digitale Objekt und zumindest eines der den Anwendungsfenstern (8a, 8b) zugeordneten Anwendungsprogramme erzeugbar und ausführbar ist, wobei die weitere Zeichenkette eine URL zur Lokalisierung eines digitalen Objekts sowie Angaben zu der durchzuführenden Operation umfasst.

## Claims

1. Method for operating a computer system in a vehicle (1), in which
graphics data of a display are generated and output; at least one character string is detected;
the at least one character string is taken as a basis for generating and executing a command for an application program, wherein the command relates to a particular program state of the application program;
the character string is further taken as a basis for generating within the display an application window (8, 8a, 8b, 8c) that has window properties and that is associated with the application program, wherein the application window (8, 8a, 8b, 8c) is generated on the basis of the program state of the application program; and
the application window (8, 8a, 8b, 8c) and the application program are taken as a basis for generating a new character string,
**characterized in that** a user input is detected that comprises a swipe gesture from an initial position to a final position, wherein the initial position and the final position are each assigned an application window (8a, 8b), and wherein the initial position is assigned a digital object,
the swipe gesture is taken as a basis for generating a further character string and
the further character string is taken as a basis for generating and executing a command for the digital object and at least one of the application programs associated with the application windows (8a, 8b), wherein the further character string comprises a URL for locating a digital object and details pertaining to an operation that is to be performed.

2. Method according to Claim 1,
**characterized in that**
the new character string is stored in non-volatile fashion in a list of character strings.

3. Method according to Claim 2,
**characterized in that**
the list of character strings is taken as a basis for restoring the display with the application window (8, 8a, 8b, 8c) after a restart of the computer system.

4. Method according to Claim 2 or 3,
**characterized in that**
the list of character strings is associated with a user.

5. Method according to one of the preceding claims,
**characterized in that**
when a basic state of the computer system is activated the display comprises a basic surface having tile-like elements (7).

6. Method according to Claim 5,
**characterized in that**
the basic surface in the basic state of the computer system comprises at least one selectable tile-like element (7), wherein the tile-like element (7) is associated with an application program, and
a selection of the tile-like element (7) results in a character string being detected such that a command for the associated application program is generated and executed and an application window (8, 8a, 8b, 8c) for the application program is generated.

7. Method according to Claim 5 or 6,
**characterized in that**
the tile-like element (7) comprises a graphical representation of the associated application program.

8. Method according to one of the preceding claims,
**characterized in that**
the display comprises at least two surface regions (4a, 4b, 4c), in particular a main region (4b) and an information region (4a).

9. Method according to one of the preceding claims,
**characterized in that**
a user input is further detected,
the user input is taken as a basis for determining input relevance values for the currently executed application programs, and
the user input is transmitted to one of the currently executed application programs on the basis of the input relevance values.

10. Method according to one of the preceding claims,
**characterized in that**
the display comprises an application window (8, 8a, 8b, 8c) that fills the display area (4, 4b) completely.

11. Method according to one of the preceding claims,
**characterized in that**
at least two application programs are executed at the same time and
the display comprises a separate application window (8, 8a, 8b, 8c) for each of the application programs,
wherein the application windows (8, 8a, 8b, 8c) are assigned a priority value and the display with the application windows (8, 8a, 8b, 8c) is further generated on the basis of the priority value.

12. Method according to Claim 11,
**characterized in that**
the application windows (8, 8a, 8b, 8c) have completely or partially transparent regions, wherein the display is generated on the basis of the priority values such that other application windows (8, 8a, 8b, 8c) are visible behind the respective application windows (8, 8a, 8b, 8c).

13. Method according to one of the preceding claims,
**characterized in that**
the size and/or position and/or transparency of the application window (8, 8a, 8b, 8c) are/is determined on the basis of a user input and/or on the basis of data of the application program.

14. Computer system in a vehicle (1) having
a control unit (2) by means of which graphics data of a display are generable;
a display unit (3) by means of which the graphics data are outputtable;
a detection unit (10) by means of which a character string is detectable;
a computation unit (5) by means of which the character string is able to be taken as a basis for generating and executing a command for an application program, wherein the command relates to a particular program state of the application program, and the character string is able to be taken as a basis for generating within the display an application window (8, 8a, 8b, 8c) that has window properties and that is associated with the application program, wherein the application window (8, 8a, 8b, 8c) is generated on the basis of the program state of the application program; wherein the computation unit (5) is able to take the application window (8, 8a, 8b, 8c) and the application program as a basis for generating a new character string,
**characterized in that** a user input is detectable that comprises a swipe gesture from an initial position to a final position, wherein the initial position and the final position are each able to be assigned an application window (8a, 8b), and wherein the initial position is able to be assigned a digital object,
the swipe gesture is able to be taken as a basis for generating a further character string and
the further character string is able to be taken as a basis for generating and executing a command for the digital object and at least one of the application programs associated with the application windows (8a, 8b),
wherein the further character string comprises a URL for locating a digital object and details pertaining to the operation that is to be performed.

## Revendications

1. Procédé pour faire fonctionner un système informatique dans un véhicule (1), dans lequel des données graphiques d'un affichage sont générées et délivrées ;
au moins une chaîne de caractères est détectée ;
une instruction destinée à un programme d'application est générée et exécutée sur la base de l'au moins une chaîne de caractères, dans lequel l'instruction concerne un état de programme déterminé du programme d'application ;
une fenêtre d'application (8, 8a, 8b, 8c) présentant des propriétés de fenêtre et associée au programme d'application est en outre générée dans l'affichage sur la base de la chaîne de caractères, dans lequel la fenêtre d'application (8, 8a, 8b, 8c) est générée sur la base de l'état de programme du programme d'application ; et
une nouvelle chaîne de caractères est générée sur la base de la fenêtre d'application (8, 8a, 8b, 8c) et du programme d'application,
**caractérisé en ce qu'**une entrée utilisateur comprenant un geste d'essuyage allant d'une position initiale à une position finale est détectée, dans lequel une fenêtre d'application (8a, 8b) est respectivement associée à la position initiale et à la position finale, et dans lequel un objet numérique est associé à la position initiale, une autre chaîne de caractères est générée sur la base du geste d'essuyage, et
une instruction destinée à l'objet numérique est générée et exécutée sur la base de l'autre chaîne de caractères et d'au moins l'un des programmes d'application associés aux fenêtres d'application (8a, 8b),
dans lequel l'autre chaîne de caractères comprend une URL permettant de localiser un objet numérique et des informations concernant une opération à effectuer.

2. Procédé selon la revendication 1, **caractérisé en ce que** la nouvelle chaîne de caractères est stockée de manière non-volatile dans une liste de chaînes de caractères.

3. Procédé selon la revendication 2, **caractérisé en ce que** l'affichage comportant la fenêtre d'application (8, 8a, 8b, 8c) est restauré sur la base de la liste de chaînes de caractères après un redémarrage du système informatique.

4. Procédé selon la revendication 2 ou 3, **caractérisé en ce que** la liste de chaînes de caractères est associée à un utilisateur.

5. Procédé selon l'une des revendications précédentes, **caractérisé en ce que**, lorsqu'un état de base du système informatique est activé, l'affichage comprend une surface de base comportant des éléments en forme de tuiles (7).

6. Procédé selon la revendication 5, **caractérisé en ce que** la surface de base comprend au moins un élément en forme de tuile (7) pouvant être sélectionné dans l'état de base du système informatique, dans lequel l'élément en forme de tuile (7) est associé à un programme d'application et
lorsque l'élément en forme de tuile (7) est sélectionné, une chaîne de caractères est détectée de telle sorte qu'une instruction destinée au programme d'application associé soit générée et exécutée et qu'une fenêtre d'application (8, 8a, 8b, 8c) destinée au programme d'application soit générée.

7. Procédé selon la revendication 5 ou 6, **caractérisé en ce que** l'élément en forme de tuile (7) comprend une représentation graphique du programme d'application associé.

8. Procédé selon l'une des revendications précédentes, **caractérisé en ce que** l'affichage comprend au moins deux zones planes (4a, 4b, 4c), en particulier une zone principale (4b) et une zone d'information (4a).

9. Procédé selon l'une des revendications précédentes, **caractérisé**
**en ce qu'**une entrée utilisateur est en outre détectée, **en ce que** des valeurs de pertinence de l'entrée sont déterminées sur la base de l'entrée utilisateur pour les programmes d'application actuellement exécutés et
**en ce que** l'entrée utilisateur est transmise à l'un des programmes d'application actuellement exécutés en fonction des valeurs de pertinence de l'entrée.

10. Procédé selon l'une des revendications précédentes, **caractérisé en ce que** l'affichage comprend une fenêtre d'application (8, 8a, 8b, 8c) qui remplit entièrement la surface d'affichage (4, 4b).

11. Procédé selon l'une des revendications précédentes, **caractérisé**
**en ce qu'**au moins deux programmes d'application sont exécutés simultanément et
**en ce que** l'affichage comprend une fenêtre d'application séparée (8, 8a, 8b, 8c) pour chacun des programmes d'application,
dans lequel une valeur de priorité est associée aux fenêtres d'application (8, 8a, 8b, 8c) et l'affichage comportant les fenêtres d'application (8, 8a, 8b, 8c) est en outre généré sur la base de la valeur de priorité.

12. Procédé selon la revendication 11, **caractérisé en ce que** les fenêtres d'application (8, 8a, 8b, 8c) présentent des zones entièrement ou partiellement transparentes, dans lequel l'affichage est généré sur la base des valeurs de priorité de manière à ce que d'autres fenêtres d'application (8, 8a, 8b, 8c) soient visibles derrière les fenêtres d'application (8, 8a, 8b, 8c) respectives.

13. Procédé selon l'une des revendications précédentes, **caractérisé en ce que** la taille et/ou la position et/ou la transparence de la fenêtre d'application (8, 8a, 8b, 8c) est déterminée sur la base d'une entrée utilisateur et/ou sur la base de données du programme d'application.

14. Système informatique dans un véhicule (1), comportant
une unité de commande (2) au moyen de laquelle des données graphiques d'un affichage peuvent être générées ;
une unité d'affichage (3) au moyen de laquelle les données graphiques peuvent être délivrées ;
une unité de détection (10) au moyen de laquelle une chaîne de caractères peut être détectée ;
une unité informatique (5) au moyen de laquelle une instruction destinée à un programme d'application peut être générée et exécutée sur la base de la chaîne de caractères, dans lequel l'instruction concerne un état de programme déterminé du programme d'application, et une fenêtre d'application (8, 8a, 8b, 8c) présentant des propriétés de fenêtre et associée au programme d'application peut être générée dans l'affichage sur la base de la chaîne de caractères, dans lequel la fenêtre d'application (8, 8a, 8b, 8c) est générée en fonction de l'état de programme du programme d'application ;
dans lequel une nouvelle chaîne de caractères peut être générée par l'unité informatique (5) sur la base de la fenêtre d'application (8, 8a, 8b, 8c) et du programme d'application,
**caractérisé en ce qu'**une entrée utilisateur comprenant un geste d'essuyage allant d'une position initiale à une position finale peut être détectée, dans lequel une fenêtre d'application (8a, 8b) peut être respectivement associée à la position initiale et à la position finale, et dans lequel un objet numérique peut être associé à la position initiale,
une autre chaîne de caractères peut être générée sur la base du geste d'essuyage, et
une instruction destinée à l'objet numérique peut être générée et exécutée sur la base de l'autre chaîne de caractères et d'au moins l'un des programmes d'application associés aux fenêtres d'application (8a, 8b),
dans lequel l'autre chaîne de caractères comprend une URL permettant de localiser un objet numérique ainsi que des informations concernant l'opération à effectuer.
